# EUROPEAN PATENT APPLICATION

(11) **EP 1 087 508 A1**
(43) Date of publication of application: **28.03.2001**
(21) Application number: 99830592.4
(22) Date of filing: 21.09.1999
(51) Int. Cl.: H02M 3/157

(54) **Method of controlling a DC-DC converter**

(71) Applicant: STMicroelectronics S.r.l., 20041 Agrate Brianza (Milano) (IT)
(72) Inventor: Zafarana, Alessandro, 20137 Milano (IT)
(74) Representative: Pellegri, Alberto

(57) **Abstract**

A method of controlling a DC-DC converter having means for comparing the output voltage with a low threshold and a high threshold, means injecting a certain minimum electric charge into an inductor of the converter during a conduction phase of at least a power switch, comprises commanding the beginning of a conduction phase each time the output voltage drops below the low threshold, progressively increasing the electric charge transferred during a conduction phase by incrementing its duration until the output voltage rises to said high threshold, starting from said low threshold upon executing a single conduction phase, measuring and storing the duration of the time interval between two consecutive conduction phases, comparing the current time interval with the previously detected and stored time interval, decreasing the duration of the next conduction phase to correspond to said minimum electric charge whenever an increment of the time interval between two consecutive conduction phases is detected.

A hardware implementation is also described.

## Description

### FIELD OF THE INVENTION

The invention relates to DC-DC converters and in particular to the problem of voltage regulation on variable loads.

### BACKGROUND OF THE INVENTION

Voltage regulation circuits typically provide a certain voltage that is maintained constant by feeding-back the output. In a PWM switching regulator, a square wave drives the control terminal of a switch determining its conduction or cut-off state. By increasing the time interval of conduction of the switch, the output voltage increases and the contrary occurs by increasing the time interval of cut-off. Therefore, the output voltage is controlled by varying the duty cycle of the square wave driving signal. Such a control of the duty cycle is performed by a circuit which continuously compares the output voltage with a reference voltage and adjusts the duty cycle of the square wave in order to keep constant the output voltage.

When the switch is a MOS transistor, a nonnegligible power is required to charge periodically the gates of the switching transistors. The switching power loss increases as the switching frequency increases, negatively affecting the converter efficiency.

On the other side, the requisite of limiting the variations of the voltage applied to the load within a tolerable range does not permit to reduce the switching frequency as much as desired.

To maximize the conversion efficiency of a switching regulator, several manufactures implement the so-called PFM (Pulse Frequency Modulation) technique or skip mode. Such a technique consists in controlling the peak value of the current flowing in the inductor while operating in a discontinuous mode.

In the commercial device MIC 2177/8/9 of Micrel, a control with constant current peaks is realized as far as the load remains relatively low. For high loads, the control made reverts to a traditional PWM control at a fixed switching frequency.

This technique does not maximize efficiency because it does not minimize the switching power losses and the power losses in the driver steps of the power MOS that are predominant under low load conditions.

A way for reducing the switching power losses is disclosed in the patent US 5,568,044-A, wherein a controller of a DC-DC converter is presented that implements the two different control techniques PWM (Pulse Width Modulation) and PFM (Pulse Frequency Modulation), using the one with lowest power dissipation upon a change of load conditions.

### OBJECT AND SUMMARY OF THE INVENTION

It has now been found and is the object of the present invention, a method of controlling a DC-DC converter through an iterative procedure that makes the circuit operate at optimal conditions by adapting by itself to any variation of the load. The method of the invention can be used together with other known techniques of controlling a DC-DC converter (e.g. PWM and PFM).

According to an aspect of this invention, the controller, designed such to adjust the switching frequency be close as possible to the optimal frequency, minimizes switching power losses and driver losses thus maximizing the power being transferred from the supply to the load.

The method of the invention of controlling a DC-DC converter, having means comparing the output voltage with a pre-established low threshold and a pre-established high threshold and means injecting a certain minimum electric charge to be transferred into the inductor of the converter during a conduction interval or phase of a power switch, consists in
commanding the beginning of a conduction phase each time the output voltage reaches said low threshold;
increasing progressively the electric charge that is transferred during each conduction phase until the output voltage reaches said high threshold starting from the low threshold in a single conduction phase;
monitoring and storing the duration of the off interval of the switch between two consecutive conduction phases;
comparing the current off interval with the previously stored off interval;
decreasing to said minimum value the electric charge being transferred when detecting an increment of the off interval of the switch between two consecutive conduction phases.

The method of the invention can be implemented by realizing a DC-DC converter employing one or more power switches, driving in a switching mode an inductor transferring electric charge from a supply node to a load of the converter, controlled by logic charge or not charge commands in execution of start-up, voltage regulation and efficiency boosting algorithms by a controller, and having a plurality of inputs, a pairs of comparators of the output voltage of the converter respectively with an high threshold and a low threshold established by said controller by way of a digital datum that is converted by a first digital/analog converter into a reference voltage that is applied to the reference inputs of said pair of comparators, whose outputs are coupled to respective inputs of said controller, means monitoring the current through a power switch charging the inductor, means monitoring the reaching of the null value of the current in said inductor, and having a third comparator comparing with a digital value N produced by said controller and converted in a reference voltage by a second digital/analog converter, depending on the logic state of a signal (HCEN) produced by the controller either a linear voltage ramp with a pre-established slope or a voltage value proportional to said current through the power switch.

### BRIEF DESCRIPTION OF THE DRAWINGS

The different aspects and advantages of the invention will result more evident by the description of an embodiment of the invention and by referring to the attached drawings where:
**Fig. 1** illustrates the mechanism of correction of output voltage changes by varyingly spaced current pulses of different amplitudes forced through the inductor of the DC-DC converter, according to the method of the present invention;
**Fig. 2** depicts a control system of the invention based on the use of a digital state machine (DIGITAL ASYNC CONTROLLER);
**Fig. 3** is a flow chart of the algorithm executed by the finite state machine at the start-up of the system;
**Fig. 4** is a flow chart of the regulation algorithm executed by the finite state machine;
**Fig. 5** is a flow chart of the algorithm of "Low Power Consumption" (LPC) that activates the drivers of the analog portions of the control system, executed by the finite state machine.

### DESCRIPTION OF AN EMBODIMENT OF THE INVENTION

The method of the invention is based on an architecture for controlling the output voltage with the maximum efficiency, employing inductor current detection circuits, comparators of the output voltage with pre-established thresholds, and circuit devices measuring the time interval between two consecutive current pulses and a state machine controller managing the converter.

To attain the maximum conversion efficiency, an expression of the switching frequency as a function of the load current that minimize the switching losses and driver losses is calculated on the basis of the parameters of the particular application. The converter circuit is thus designed by properly choosing the values of inductance, output capacity of the DC-DC converter and amplitude of the hysteresis window within which the output voltage may vary, such that the controller be able to establish the switching frequency that minimize a power losses in case of the minimum load and of the maximum load.

The regulation of the output voltage is ensured by a hysteresis window of regulation of the output voltage of the converter, implemented by a pair of threshold comparators.

The control method of the present invention, that may be defined by the acronym PCV (Peak Current Variation) attains the optimal frequency of operation of the converter by progressively incrementing the peak level of the current pulses delivered to the inductor until, in a substantially steady-state of operation, the output voltage rises from the lower threshold to the upper threshold of the hysteresis window of regulation upon forcing a single current pulse through the inductor of the converter.

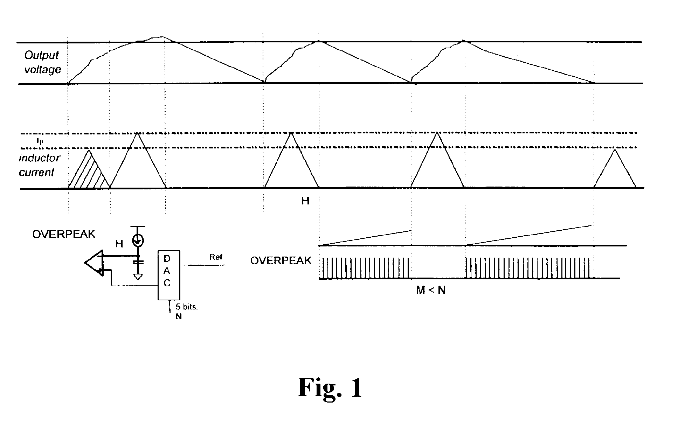

With reference to Fig. 1, when the output voltage reaches the lower threshold value of the hysteresis window, the control logic commands the delivery of a substantially triangular current pulse of peak value I_{P} to the inductor (Inductor Current).

If after such a first conduction phase the output voltage does not reaches the upper threshold of the hysteresis window, one or more triangular current pulses with peak values progressively increased by a certain defined quantity Iₛₜₑₚ will be delivered to the inductor, until the output voltage (Output Voltage) reaches the upper threshold of the hysteresis window.

The system waits for the output voltage to become lower than the lower threshold of the hysteresis window and when this occurs it deliveres a new current pulse having the same amplitude of the second pulse of the preceding series of delivered current pulses. If this new single pulse is not sufficient to make the output voltage reach the high threshold, one or more current pulses of incremented peak values will be delivered to the inductor. The above algorithm is repeated until a steady state situation is eventually attained whereat, following the delivery of a single current pulse, the output voltage rises from the lower threshold to the upper threshold of the hysteresis window of regulation.

This procedure is repeated from the beginning at each decrease of the load that is detected by the controller in the following manner: when the output voltage reaches the upper threshold of the hysteresis window with a single triangular current pulse, a device (OVERPEAK) measuring the time elapsed from the end of last pulse and the immediately following pulse is activated. Such a value of the time interval is stored and, during the following cycle, is compared with the time elapsed between the two immediately following pulses: if this last interval value is greater than the previously stored value, then the load has diminished and the procedure is repeated from the beginning. On the contrary, if the stored value is greater than the current value, then the load has increased and the above described routine will adapt the converter automatically to the new operating conditions.

A suitable form of implementation of a circuit for measuring time intervals may consist in generating a linear voltage ramp, for example by way of a capacitor charged by a current generator, that is applied to the negative input of a voltage comparator, to the positive input of which is coupled the output of a DAC2 (Digital to Analog Converter) transforming a datum or digital word N, provided by the controller, in a corresponding analog voltage signal.

Initially N is equal to zero and establishes the lowest output voltage of the DAC2. When the analog ramp reaches this threshold set by the controller, the comparator switches from a logic low to a logic high and a counter, contained in the controller, increases N by detecting such a switching edge. In this way, an analog voltage signal greater than the previous one is output by the DAC2 and the comparator switches from high to low. These steps are repeated each time the analog ramp reaches the analog voltage signal set by the DAC2. When the output voltage of the DC-DC converter surpasses the lower threshold of the hysteresis windows, the start-up process terminates, the value N having been so determined.

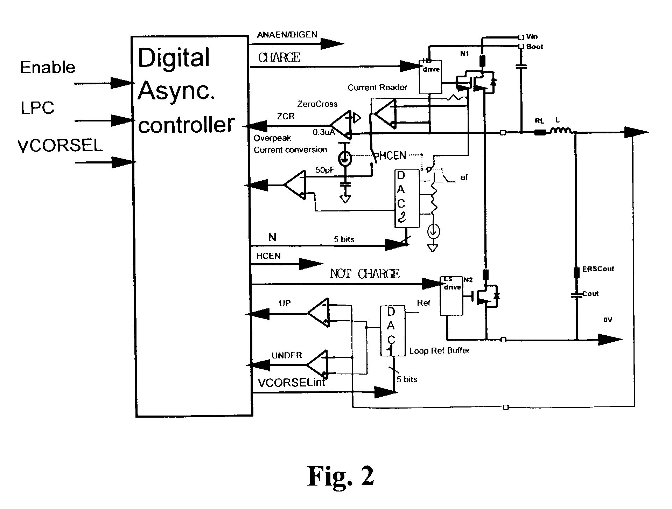

Fig. 2 depicts an hardware embodiment of the invention as applied to a DC-DC "step-down" converter, supplied by a voltage Vin, and essentially constituted by an inductor L, an output capacitor Cout, a pair of power switches, respectively an upper switch N1 and lower switch N2 that in the illustrated example are realized with power MOS transistors, and the respective driving circuits HS_{DRIVE} and LS_{DRlVE}, enabled or disabled by the logic signals CHARGE and NOT CHARGE. The scheme also includes a boot-strap capacitor BOOT, according to a common practice.

The control system comprises a pair of voltage comparators, comparing the output voltage with a reference voltage produced by a first digital/analog converter (DAC1) as a function of a given digital datum VCORSEL_{INT}, provided by the controller, and producing two logic signals UP and UNDER, respectively.

A third comparator ZEROCROSS detects the zero crosses of the current in the inductor L, generating a logic signal ZCR at each event.

The controller may be a finite state digital machine DIGITAL ASYNC. CONTROLLER, which preferably may be enabled or disabled by a logic command Enable, allowing the control of the DC-DC converter to be made according to other conventional modes in case that particular load conditions do not allow the PCV control mode of the invention or for any other reasons.

The DIGITAL ASYNC. CONTROLLER receives from outside the information about the amplitude of the hysteresis window of regulation within which the output voltage is permitted to vary, and produce the digital datum VCORSFL_{INT} that is fed to the DAC1, which sets the reference voltage of the UP and UNDER comparators.

The current flowing through the upper switch N1 is read on a sensing resistance in series to the upper switch N1, or to a scaled replica of the power switch, by an operational amplifier CURRENT READER outputting a voltage proportional to current.

A fourth voltage comparator OVERPEAK has an input coupled to the output of a second digital/analog converter DAC2 and the other input either, depending on the value assumed by a control signal HCEN produced by the finite state machine, to the output of a linear ramp voltage generator with pre-established slope constituted by an electrical series of a current generator and a capacitor, or to the voltage produced by the operational amplifier CURRENT READER.

Such a second digital/analog converter produces a voltage that may assume different values, depending on the digital datum N produced by the DIGITAL ASYNC. CONTROLLER. Such voltage values can be produced, as exemplified in the figure, by a voltage divider through which is forced the current produced by a current generator.

Preferably, the asynchronous finite state machine DIGITAL ASYNC. CONTROLLER implements three algorithms, respectively a start-up routine, a regulation routine and "Low Power Consumption" (LPC) routine.

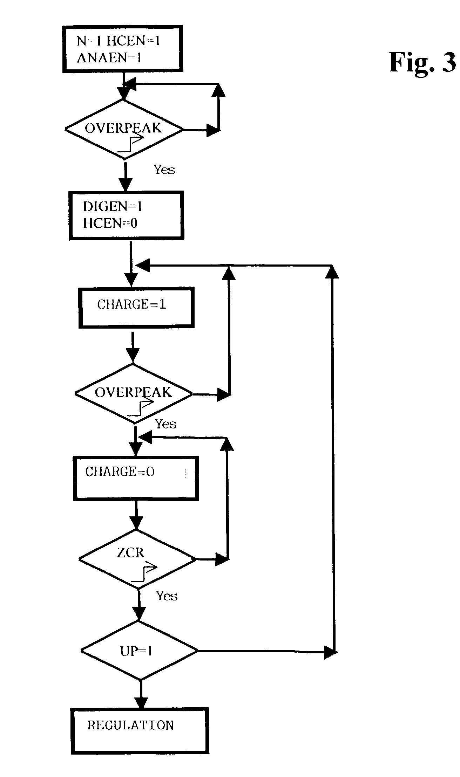

The start-up algorithm illustrated in the flow chart of Fig. 3, consists in carrying out all the necessary operations to properly enable the analog portions of the control system and to ensure that they (comparators, for example) are in a steady state operation conditions and correctly biased, before beginning the regulation algorithm.

At the start-up of the system, the asynchronous finite state machine enables the analog portion of the converter, sets the signal HCEN=1, thus so enabling the linear ramp voltage generator and coupling the output of the CURRENT READER to the input of the comparator OVERPEAK, and waits for the output of the comparator OVERPEAK to switch from low to high.

At the transition of the signal OVERPEAK, the analog components (voltage comparators) are surely in steady state and correctly biased.

At the leading edge of the signal OVERPEAK, the finite state asynchronous digital machine enables the power drivers (DIGEN=1), establishes the peak value of the current and commands the charge/discharge phases until the output voltage reaches the desired level (UP=1).

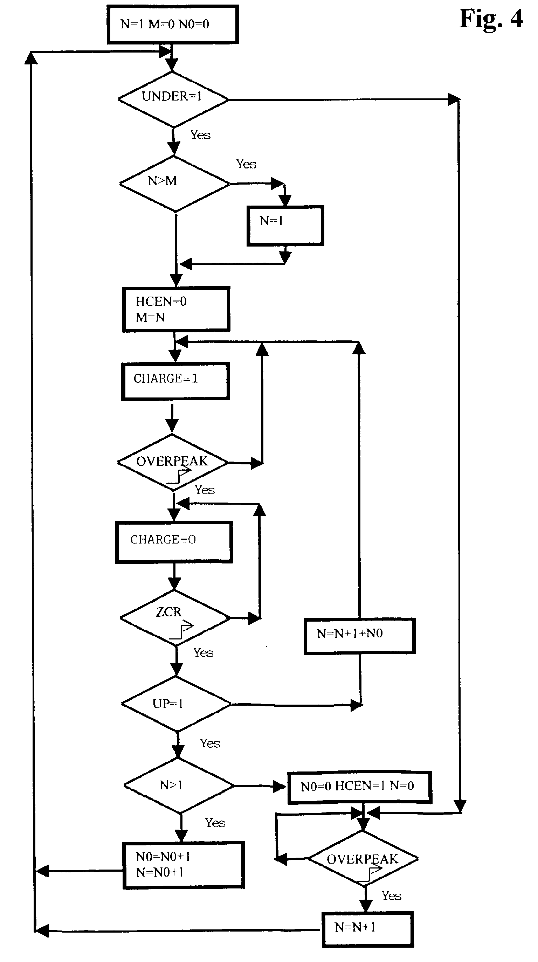

Once such a level has been attained, the regulation algorithm of the invention, which has been previously described and which is schematically illustrated by the flow chart of Fig. 4, is implemented.

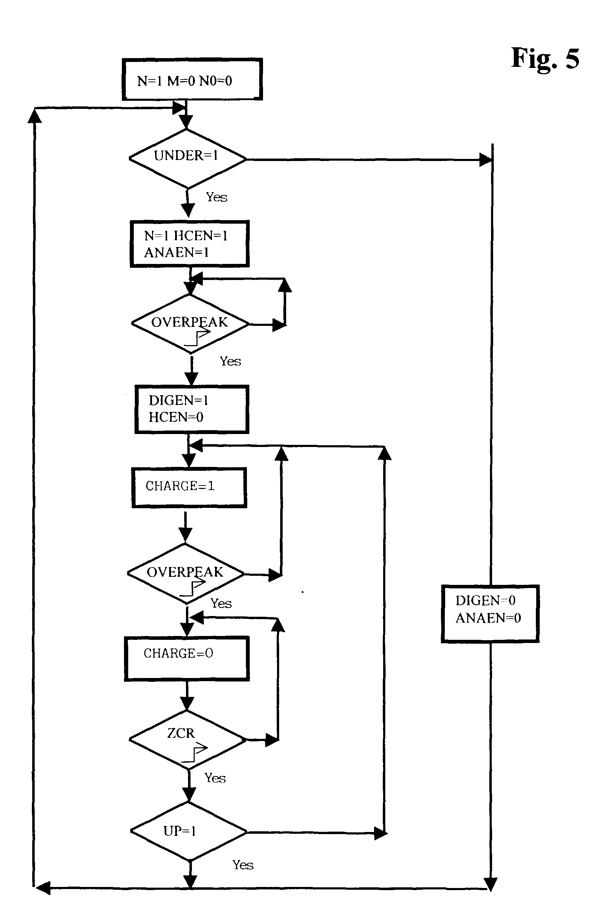

The "Low Power Consumption" algorithm (LPC), illustrated in the flow chart of Fig. 5, has the function of enabling/disabling the drivers and the analog components, thus allowing a further energy saving.

When the LPC signal is high and the finite state machine is executing the regulation algorithm, meanwhile the output voltage is declining toward the lower threshold of the hysteresis window (UNDER=1) the power drivers and the analog components are disabled, except the comparator UNDER.

When the voltage has reaches the low threshold, the finite state machine enables again the analog components, sets the signal HCEN=1, thus having the comparator OVERPEAK compare the current in the upper side switch N1 with a pre-established value provided by the DAC2 coupled to the comparator.

Similarly to what happens during the start-up algorithm, the leading edge of OVERPEAK signal confirms that the analog components are in a steady state and so it is possible to enable the drivers (DIGEN=1) and to start the regulation algorithm.

In some applications, it may be necessary to limit to a given minimum value the switching frequency in order to avoid that circuits coupled with the DC-DC converter be subject to undesired interferences phenomena. In audio applications for example, it is useful to ensure that the switching frequency do not decrease below about 20kHz in order to prevent interference problems.

To ensure this, the method of the invention may be modified in order to force a turn-on and turn-off phase even if the output voltage has not attained the upper threshold of the hysteresis window, whenever the time interval between two consecutive phases exceeds a certain pre-established time, for example 40 seconds (equivalent to a switching frequency of 25 kHz).

Such a modification can be conveniently implemented, for example, by making the finite state asynchronous machine of Fig. 2 count the number of OVERPEAK rising edges, compare such a number with a pre-established value Nmax and eventually command a turn-on and turn-off phase even if the output voltage has not yet attained the minimum allowed level, when such a number exceeds the pre-established number Nmax.

Given that the rising edges of the OVERPEAK signal are regularly spaced in time, establishing a maximum number Nmax is clearly equivalent to establish a maximum time interval that can elapse between two consecutive pulses, i.e. the minimum frequency of the pulses is inversely proportional to Nmax.

## Claims

1. A method of controlling a DC-DC converter having means for comparing the output voltage with a low threshold and a high threshold, means injecting a certain minimum electric charge into an inductor of the converter during a conduction phase of at least a power switch, comprising the following steps
commanding the beginning of a conduction phase each time the output voltage drops below said low threshold;
progressively increasing the electric charge transferred during a conduction phase by incrementing its duration until the output voltage rises to said high threshold, starting from said low threshold upon executing a single conduction phase;
measuring and storing the duration of the time interval between two consecutive conduction phases;
comparing the current time interval with the previously detected and stored time interval;
decreasing the duration of the next conduction phase to correspond to said minimum electric charge whenever an increment of the time interval between two consecutive conduction phases is detected.

2. The method of claim 1, characterized in that said time interval is further compared with a pre-established maximum value, at the overcoming of which a conduction phase with said minimum charge is commanded even if the output voltage has not yet attained the low threshold.

3. A system for controlling a DC-DC converter consisting of one or more power switches (N1, N2) driving in switch mode an inductor (L), transferring electric charge from a supply node to the load, controlled by logic commands, respectively for charging (CHARGE) and for not charging (NOT CHARGE) the inductor, by running start-up, regulation algorithms and an algorithm for keeping low the consumption in a controller (DIGITAL ASYNC. CONTROLLER), and having a plurality of inputs, a pair of comparators, first (UP) and second (UNDER), of the output voltage of the converter, respectively with a high threshold and a low threshold established by said controller by producing a digital datum (VCORSEL_{INT}) that is converted by a first digital/analog converter (DAC1) in a voltage fed to the reference inputs of said comparators, first and second, whose outputs are coupled to respective inputs of said controller, circuit means (CURRENT READER) monitoring the current flowing through a power switch (N1) charging the inductor, a third comparator (ZEROCROSS) detecting a null value of the current in said inductor, further provided with
a fourth comparator (OVERPEAK) comparing with a digital value N produced by said control digital circuit and converted in a reference voltage by a second digital/analog converter (DAC2), either a linear voltage ramp with pre-established slope or a voltage value proportional to the current charging the inductor through said power switch, depending on the logic state of a control signal (HCEN) produced by said controller.
